# EUROPÄISCHE PATENTSCHRIFT

(11) **EP 3 131 759 B1**
(45) Veröffentlichungstag und Bekanntmachung des Hinweises auf die Patenterteilung: **12.12.2018**
(21) Anmeldenummer: 15717829.4
(22) Anmeldetag: 31.03.2015
(51) Int. Cl.: B60B 7/00, B60B 7/06, B60B 7/08, B60B 27/00, F16C 33/72, F16C 33/76, F16C 33/80

(54) **RADNABENANORDNUNG**
WHEEL HUB ARRANGEMENT
SYSTÈME DE MOYEU DE ROUE

(30) Priorität: 15.04.2014 DE 102014207179
(43) Veröffentlichungstag der Anmeldung: 22.02.2017
(73) Patentinhaber: SAF-HOLLAND GmbH, 63856 Bessenbach (DE)
(72) Erfinder: WEIGAND, Werner, 63856 Bessenbach (DE)
(74) Vertreter: Müller Schupfner & Partner Patent- und Rechtsanwaltspartnerschaft mbB
(86) Internationale Anmeldenummer: PCT/EP2015/057092
(87) Internationale Veröffentlichungsnummer: WO 2015/158547

(56) Entgegenhaltungen:
- US-A- 1 766 313
- US-A- 3 393 015
- US-A- 4 489 988
- US-A- 5 217 137

## Beschreibung

Diese Erfindung betrifft eine Radnabenanordnung, insbesondere zum Einsatz in Nutzfahrzeugen.

Radnabenanordnungen mit Radkappen zur Abdeckung verschiedener Bereiche an einem Fahrzeugrad oder an der Radnabe eines Fahrzeuges sind aus dem Stand der Technik bekannt. Sie schützen die inneren Bereiche des Rades und/oder der Radnabe gegen Eindringen von Schmutz und Feuchtigkeit und daraus resultierende Beschädigungen. Zur Unterstützung der Abdichtungswirkung der Radkappe ist es aus dem Stand der Technik ebenfalls bekannt zwischen der Radnabe und der Radkappe Dichtungsringe, beispielsweise Gummidichtungen anzuordnen, welche die abdichtende Wirkung der Radkappe verbessern. Die aus dem Stand der Technik bekannten Lösungen weisen aber Defizite auf, da insbesondere wenn Flüssigkeit mit hoher Geschwindigkeit auf den Bereich zwischen Radkappe und Radnabe auftrifft, die aus dem Stand der Technik bekannten Dichtungen oft keine ausreichende Abdichtungswirkung erreichen. So hat es sich herausgestellt, dass insbesondere bei schneller Fahrt im Regen oder beispielsweise im Stand des Nutzfahrzeuges bei einer Reinigung der Räder mit einem Hochdruckreinigungsgerät, immer wieder Wasser oder andere Flüssigkeiten in den Innenbereich der Nabe gelangen können.

Die US-3,393,015, die US-4,489,988, die US-1,766,313 und die US-5,217,137 betreffen Radnabenanordnungen mit einer Radnabe, welche auf einer Achse geführt ist, wobei eine Radkappe vorgesehen ist, die den Raum zwischen Radnabe und Radachse abkapselt.

Aufgabe der vorliegenden Erfindung ist es, die schützende Wirkung einer Radkappe dahingehend zu verbessern, dass auch mit hoher Geschwindigkeit auftreffende Flüssigkeiten oder Schmutzteilchen wirksam von dem Innenbereich der Radnabe abgehalten werden können.

Diese Aufgabe wird gelöst mit einer Radnabenanordnung gemäß dem unabhängigen Anspruch 1. Weitere Vorteile und Merkmale der vorliegenden Erfindung ergeben sich aus den abhängigen Ansprüchen.

Erfindungsgemäß ist eine Radnabenanordnung vorgesehen, welche eine Nabe und eine Radkappe umfasst, wobei die Radkappe in einer Aussparung der Nabe derart festlegbar ist, dass die Radkappe einen Außenbereich von einem Innenbereich der Nabe abgrenzt, wobei zwischen der Nabe und der Radkappe ein Dichtungselement angeordnet ist, wobei das Dichtungselement einen Grundkörper und eine Dichtlippe aufweist, und die Dichtlippe vom Grundkörper absteht und zum Außenbereich gewandt ist.

In einer bevorzugten Ausführungsform weist die Radkappe zusätzlich einen Abschirmabschnitt auf, wobei der Abschirmabschnitt den Spalt zwischen Nabe und Radkappe und/oder das in dem Spalt angeordnete Dichtungselement in zumindest einer Abschirmrichtung abschirmt. Das Dichtungsprofil ist derart ausgebildet, dass es bei direktem Auftreffen von Flüssigkeit oder Schmutzteilchen auf das Dichtungsprofil auch vorherige Abschirmung eine optimale Dichtungswirkung erzeugt. Hierfür ist das Dichtungsprofil vorzugsweise als Profildichtung ausgeführt, wobei ein Grundkörper und eine Dichtlippe vorgesehen sind, wobei die Dichtlippe derart vom Grundkörper absteht, dass eine vom Außenbereich auf die Dichtlippe auftreffende Flüssigkeits- oder Schmutzteilchenströmung an der Dichtlippe eine Kraftkomponente erzeugt, welche die Dichtlippe stärker gegen die Nabe oder die Radkappe presst, wobei auf diese Weise die durch das Dichtungselement erzielte Dichtwirkung erhöht wird. Hierfür ist die Dichtlippe zum Außenbereich gewandt. Dies bedeutet insbesondere, dass die Dichtlippe innerhalb des Spaltes in Richtung vom Innenbereich zum Außenbereich ragt. In anderen Worten ist der Fuß der Dichtlippe näher dem Innenbereich zugewandt als das distale Ende der Dichtlippe, welches wiederum dem Außenbereich näher zugewandt ist als der Fuß der Dichtlippe. Besonders bevorzugt ist das Dichtungselement als Lamellendichtung ausgeführt, welche für die Abdichtung von sich nicht relativ zueinander bewegenden Körpern ausgebildet ist. Hierzu weisen die Kontaktflächen des Dichtungselements, welche jeweils an der Nabe oder der Radkappe anliegen flächige, vorzugsweise haftverstärkte Oberflächen auf.

In einer bevorzugten Ausgestaltung weist die Radkappe einen Eingriffsabschnitt und einen Abschirmabschnitt auf, wobei der Eingriffsabschnitt in der Aussparung einer Nabe derart festlegbar ist, dass die Radkappe einen Außenbereich von einem Innenbereich der Nabe abgrenzt, wobei zwischen der Nabe und der Radkappe ein Spalt gebildet ist, wobei der Abschirmabschnitt den Spalt zwischen Nabe und Radkappe und/oder ein in dem Spalt angeordnetes Dichtungselement in zumindest einer Abschirmrichtung abschirmt. Die beiden wesentlichen Teile der Radkappe sind der Eingriffsabschnitt und der Abschirmabschnitt, wobei der Eingriffsabschnitt mit Vorteil dafür ausgelegt ist, formschlüssig in eine entsprechende Eingriffsgeometrie einer Nabe in Eingriff gebracht zu werden. Der Abschirmabschnitt ist derart ausgebildet ist, dass er eine Barriere zum Versperren des Weges in das Innere der Nabe darstellt. Mit anderen Worten bildet die Radkappe einen Deckel, welcher auf eine Aussparung einer Nabe eines Nutzfahrzeuges aufgesetzt und an dieser festgelegt werden kann. Aufgrund von Fertigungstoleranzen ist es meistens unvermeidlich, dass zwischen der Radkappe und der Nabe ein Spalt verbleibt, wobei mit Vorteil zur weiteren Unterstützung der Abdichtungswirkung der Radkappe in diesem Spalt ein Dichtungselement eingesetzt sein kann. Der Abschirmabschnitt der Radkappe ist derart ausgebildet, dass er den Spalt und/oder das in dem Spalt angeordnete Dichtungselement in zumindest einer Abschirmrichtung abschirmt. Abschirmen bedeutet in diesem Zusammenhang, dass der Abschirmabschnitt derart angeordnet ist, dass ein direkter Zugang, bzw. ein Zugang auf geradem Wege, von der äußeren Umgebung zum Spalt und/oder Dichtungselement verhindert ist. Mit anderen Worten verhindert der Abschirmabschnitt also, dass beispielsweise ein Wasserstrahl eines Hochdruckreinigers direkt auf den Spalt beziehungsweise auf das im Spalt angeordnete Dichtungselement zuströmen kann und bildet somit eine Barriere für sich auf den Spalt entlang einer Abschirmrichtung zu bewegende Flüssigkeiten oder Partikel.

Vorzugsweise bilden, wenn die Radnabenanordnung ein erfindungsgemäßes Dichtungselement aufweist, der Grundkörper und die Dichtlippe eine gekrümmte Außenfläche, die zum Außenbereich hin konkav gekrümmt ist. Die zum Außenbereich hin konkav gekrümmte Außenfläche des Dichtungsprofils erreicht, im Gegensatz zu aus dem Stand der Technik bekannten Dichtungen, dass auftreffende Flüssigkeit oder Schmutzteilchen ihre kinetische Energie derart an das Dichtungsprofil übertragen, dass sowohl der Grundkörper als auch die Dichtlippe des Dichtungsprofils mit höherer Kraft an die jeweils korrespondierenden Flächen der Nabe und der Radkappe gepresst werden, wodurch sich die durch das Dichtungsprofil erreichte Dichtwirkung signifikant erhöht. Herkömmliche O-Ringe beispielsweise wandeln die kinetische Energie eines Wasserstrahls nicht in statischen Druck um sondern leiten das Wasser in Richtung ihrer an den abzudichtenden Bauteilen liegenden Flanken um, wodurch das Wasser mit der ihm verbleibenden kinetischen Energie an der Dichtung vorbeigelangen kann. Die bevorzugt konkav gekrümmte Oberfläche des Dichtungselements der vorliegenden Erfindung, wandelt die kinetische Energie einer auf das Dichtungselement auftreffenden Strömung zu besonders großen Teilen in statischen Druck um, der die Dichtlippe und den Grundkörper aufgrund ihrer Formgebung stärker gegen die Innenwand der Nabe und die entsprechende Außenwand der Radkappe presst.

In einer bevorzugten Ausführungsform ist, wenn die Radnabenanordnung ein erfindungsgemäßes Dichtungselement aufweist, die Dichtlippe derart ausgebildet, dass bei Anliegen eines höheren Druckes im Außenbereich als im Innenbereich, der Anpressdruck der Dichtlippe an die Nabe oder die Radkappe vergrößert ist. Abgesehen von der konkaven Krümmung der Außenfläche des Dichtungsprofils ist es bevorzugt, dass die Dichtlippe derart in Richtung des Außenbereiches ragt, dass, wenn im Außenbereich ein höherer Druck vorherrscht als im Innenbereich, der Anpressdruck der Dichtlippe an die Nabe oder die Radkappe größer ist als der Anpressdruck wäre, wenn im Außenbereich und Innenbereich der gleiche Druck vorherrschen würde. Dieses Merkmal sichert insbesondere, wenn zwar keine Strömung von Flüssigkeit oder Schmutzteilchen direkt auf das Dichtungsprofil auftrifft, sondern sich beispielsweise Wassertröpfchen im Außenbereich an dem Dichtungsprofil anlagern, welche durch beispielsweise einen Wasserstrahl in Richtung des Innenbereiches gepresst werden, dass trotz dieses Überdrucks vom Außenbereich zum Innenbereich hin das Dichtungsprofil wirksam verhindert, dass Schmutz und/oder Flüssigkeit in den Innenbereich der Nabe gelangt. Dabei kann es vorgesehen sein, dass die Dichtlippe eine Erstreckung längs der Rotationsachse aufweist die größer ist als die Erstreckung des Grundkörpers des Dichtungsprofils, wobei die Dichtlippe eine vergrößerte Anlagefläche zur Anlage an der Nabe oder der Radkappe besitzt, wobei die vergrößerte Anlagefläche geeignet ist, einen höheren Druckunterschied von außen zur Innenseite standzuhalten und somit eine verbesserte Dichtungswirkung erzielt.

Weiterhin bevorzugt ist das Dichtungselement im vorgespannten Zustand zwischen der Nabe und der Radkappe angeordnet, wobei die Nabe eine Anschlagfläche aufweist, die das Dichtungsprofil gegen Verlagerungen zum Innenbereich hin sichert. Besonders bevorzugt ist das Dichtungselement aus elastisch verformbarem Material, wie beispielsweise Gummi oder einem thermoplastischen Elastomer gefertigt, wobei das Dichtungselement vor dem Einsetzen in den Bereich zwischen der Nabe oder der Radkappe vorzugsweise ein Übermaß gegenüber diesem zwischen der Radkappe und der Radnabe gebildeten Spalt aufweist. Die nötige Verformung des Dichtungsprofils, um dieses in den Spalt zwischen Nabe und Radkappe einsetzen zu können, führt zu einer Anpresskraft des Dichtungselements gegen die Nabe und gegen die Radkappe, wobei durch diese Anpresskraft eine höhere Dichtwirkung erzielt werden kann. Vorzugsweise wird das Dichtungselement dabei gleichzeitig auch gegen die Anschlagfläche der Nabe gepresst. Hierzu kann besonders bevorzugt an der Radkappe ein Abschnitt vorgesehen sein, welcher das Dichtungselement gegen die Anschlagfläche der Nabe presst, wobei der Eingriffsabschnitt der Radkappe vorzugsweise derart ausgelegt ist, dass er mit der Nabe in formschlüssigen Eingriff bringbar ist, wobei das Dichtelement zwischen der Radkappe und der Anschlagfläche der Nabe ebenfalls vorgespannt ist.

Bevorzugt ist das Dichtungselement in einem Aufnahmeabschnitt der Radkappe gehalten. Zur Erleichterung der Montage ist es bevorzugt, dass das Dichtungselement und die Radkappe bereits vormontiert sind, wobei der Verbund aus Radkappe und Dichtungselement anschließend in die Aussparung einer Nabe einsetzbar und an der Nabe festlegbar ist. Dabei ist besonders bevorzugt der Grundkörper des Dichtungselements formschlüssig in dem Aufnahmeabschnitt der Radkappe gehalten, wobei die Dichtlippe vorzugsweise beim Einführen des Verbundes aus Dichtungselement und Radkappe in die Aussparung der Nabe derart verformt wird, dass die Dichtlippe mit einer Vorspannung gegen die Innenfläche der Aussparung der Nabe gepresst wird.

Besonders bevorzugt ist eine Radnabenanordnung vorgesehen, bei welcher die Radkappe einen Eingriffsabschnitt und einen Abschirmabschnitt umfasst, wobei der Abschirmabschnitt derart ausgelegt ist, dass er den Spalt zwischen Nabe und Radkappe und/oder das in dem Spalt angeordnete Dichtungselement gegen direktes Eintreffen von sich entlang einer Abschirmrichtung bewegenden Fluids oder Schmutzteilchen abschirmt. Durch die Kombination einer mit einem Abschirmabschnitt ausgestatteten Radkappe mit einem verbesserten Dichtungsprofil gemäß der vorliegenden Erfindung ist es möglich, mit höchster Sicherheit das Eindringen von Flüssigkeit oder Schmutzteilchen in den Innenbereich der Nabe zu verhindern.

In einer bevorzugten Ausführungsform ist, wenn die Radnabenanordnung eine erfindungsgemäße Radkappe mit Abschirmabschnitt aufweist, der Abschirmabschnitt als umlaufender Vorsprung ausgebildet und steht im Wesentlichen quer zu einer Rotationsachse von der Radkappe ab. Üblicherweise ist die Nabe eines Nutzfahrzeuges im Wesentlichen rotationssymmetrisch um eine Rotationsachse ausgebildet. Abweichungen von dieser Rotationsgeometrie können selbstverständliche einzelne, nicht rotationssymmetrisch angeordnete Bohrungen oder Vorsprünge zur Festlegung weiterer Elemente an der Nabe sein. Darüber hinaus ist es üblich, dass auch die in der Nabe vorgesehene Aussparung im Wesentlichen rotationssymmetrisch ausgebildet ist, wobei auch die in die Aussparung einzusetzende und diese abdeckende Radkappe bevorzugt rotationssymmetrisch ausgebildet ist. Der zwischen der Radkappe und der Nabe gebildete Spalt ist somit üblicherweise ein Ringraum. Es ist daher bevorzugt, dass der Abschirmabschnitt als umlaufender Vorsprung ausgebildet ist, welcher diesen ringförmigen Spalt über dessen gesamten Umfang gegen direktes Eintreffen von Flüssigkeit oder Schmutzteilchen abschirmt. Mit Vorteil kann der Abschirmabschnitt auch verschiedene Erstreckungen quer zur Rotationsachse aufweisen, wobei beispielsweise eine gestufte Ausbildung des Abschirmabschnitts vorgesehen sein kann, welche in Zusammenspiel mit der Geometrie der Innenseite der Nabe eine Art Labyrinth bildet. Auf diese bevorzugte Weise kann die Sicherheit gegen Eindringen von Flüssigkeit und Schmutz in den Innenbereich der Nabe wirksam erhöht werden.

Vorzugsweise steht, wenn die Radnabenanordnung eine erfindungsgemäße Radkappe mit Abschirmabschnitt aufweist, die Abschirmrichtung in einem Abschirmwinkel von 0° bis 90° zu der Rotationsachse. Mit anderen Worten schirmt der Abschirmabschnitt den Spalt beziehungsweise das im Spalt angeordnete Dichtungselement vorzugsweise gegen einen Bereich von Richtungen ab, wobei dieser Bereich ausgehend von der Rotationsachse, also mit einem Winkel der Abschirmrichtung von 0° zur Rotationsachse bis zu einem Winkel von 90° zur Rotationsachse verläuft. Ist der Abschirmwinkel 0° zur Rotationsachse, verläuft die Abschirmrichtung entsprechend parallel zur Rotationsachse, wobei die Radkappe geeignet ist Flüssigkeit und Schmutzteilchen, welche sich parallel zur Rotationsachse auf den Spalt und/oder das Dichtungselement zu bewegen, wirksam an einem direkten Auftreffen auf den Spalt oder das Dichtungselement hindert. Der Abschirmwinkel wird in diesem Zusammenhang stets von der Rotationsachse ausgehend in radialer Richtung nach außen gemessen, da auf einen Spalt auftreffende Flüssigkeit oder Schmutzteilchen mit einer Bewegungsrichtung, deren Abschirmwinkel kleiner als 0° zur Rotationsachse ist, bereits durch einen Deckelbereich der Radkappe am Erreichen des Spaltes beziehungsweise am direkten Auftreffen auf einen im Spalt angeordneten Dichtungsprofil, gehindert werden.

Besonders bevorzugt liegt der maximale Abschirmwinkel (αₘₐₓ) der Abschirmrichtung (RA) in einem Bereich von 20° bis 90°, vorzugsweise 30° bis 80° und insbesondere bevorzugt bei ca. 35° bis 70°. Der maximale Abschirmwinkel ist ein Ausdruck dafür, wie groß die Winkelabweichung von einströmenden Wasser oder Schmutzteilchen von der Rotationsachse sein darf, damit diese gerade noch vom Abschirmabschnitt am direkten Auftreffen auf den Spalt oder ein im Spalt angeordnetes Dichtungselement gehindert werden. Dabei wäre es theoretisch möglich die Radkappe und ihren Abschirmabschnitt derart auszubilden, dass der Abschirmabschnitt die Nabe auch außerhalb der Aussparung derart umgibt, dass eine Abschirmung in einem Winkelbereich von mehr als 90° vorgesehen ist. Diese Ausbildung der Radkappe führt aber zu einem höheren Gewicht und unter Umständen auch zu einer schlechteren Aerodynamik eines mit einer solchen Radkappe ausgestatteten Fahrzeugrades. Weiterhin ist es im Rahmen der Optimierung angebracht, den Abschirmabschnitt nur an solche Abschirmrichtungen anzupassen, in denen das Eintreffen von Flüssigkeit und Schmutzteilchen im Betrieb des Nutzfahrzeuges mit hoher Wahrscheinlichkeit zu erwarten ist. Auf diese Weise kann ein guter Kompromiss zwischen einem geringen Gewicht der Radkappe mit wenigen hervorragenden Teilen, wie beispielsweise einem überdimensionierten Abschirmabschnitt, und andererseits einer ausreichend hohen Abschirmwirkung des Abschirmabschnitts gefunden werden. Es hat sich dabei gezeigt, dass es ausreichend sein kann, den Abschirmabschnitt derart auszurichten, dass er eintreffendes Wasser und Schmutzteilchen, welche sich aus Richtungen die um einen Winkel von 30° bis 80° zur Rotationsachse verschwenkt sind, auf den Spalt oder das im Spalt angeordnete Dichtungselement zu bewegt. Für den Fall, dass ein geringes Gewicht der Radkappe und eine besonders platzsparende Ausbildung der Radkappe höher priorisiert ist als eine hohe Sicherheit gegen das Eintreffen von Flüssigkeit und Schmutz in dem Spalt, so kann es auch ausreichend sein, den Abschirmabschnitt derart auszubilden, dass der maximale Abschirmwinkel lediglich einen Bereich von 35° bis 70° relativ zur Rotationsachse abdeckt. Insbesondere bevorzugt ist ein Kompromiss vorgesehen, bei welchem der maximale Abschirmwinkel circa 45° beträgt. Je geringer der maximale Abschirmwinkel gewählt wird, desto bevorzugter kommt eine verbesserte Dichtung in dem Spalt zur Anwendung, welche derart ausgelegt ist, dass Wasser und Flüssigkeit, welche mit einem Winkel größer 45° auf das Dichtungsprofil auftreffen, besonders gut am Eindringen in den Innenbereich der Nabe gehindert werden können.

Mit Vorteil weist die gekrümmte Außenfläche des Dichtungselements einen mittleren Krümmungsradius auf, der ein 0,3- bis 2,5-faches, vorzugsweise ein 0,5- bis 1,5-faches und besonders bevorzugt ein 0,5- bis 0,8-faches der Breite des Spaltes ist. Der mittlere Krümmungsradius der gekrümmten Außenfläche des Dichtungselements ist insbesondere aus einer Schnittansicht des Dichtungselements ersichtlich. Je größer das Verhältnis des mittleren Krümmungsradius' zur Spaltbreite, welche vorzugsweise im Bereich des Dichtungselements bestimmt wird, ist, desto flacher ist die Krümmung der Außenfläche. Eine flachere Krümmung der Außenfläche bedeutet mit anderen Worten eine weniger stark profilierte Querschnittsgeometrie des Dichtungselements, welches einfacher herzustellen und durch die kompaktere Form stabiler ist. Entsprechend ist ein größeres Verhältnis bevorzugt, wenn die Herstellungskosten des Profils niedrig sein sollen und eine möglichst kompakte Bauweise des Dichtungselements ohne filigrane Lippen gefordert ist. Bei einem Verhältnis kleiner 0,5 weist die Dichtlippe und/oder der Grundkörper einen Abschnitt auf, in welchem sich die gekrümmte Außenfläche im Wesentlichen parallel zur Wand der Nabe oder der Radkappe erstreckt. Hierbei presst ein auf die Außenfläche treffender Strahl die entsprechenden Teile des Dichtungselements im Wesentlichen senkrecht gegen die entsprechende Wand der Nabe oder der Radkappe und es wird eine optimale Abdichtung erzielt. Durch die filigranere Ausbildung der Dichtlippe und des Grundkörpers ist das Dichtungselement aber empfindlicher als ein kompakt ausgebildetes Dichtungselement, wie zuvor beschrieben. Das besonders bevorzugte Verhältnis von 0,5 - 0,8 erlaubt einen günstigen Kompromiss aus einer stabilen, kompakten Bauweise des Dichtungselements und einer bestmöglichen Fähigkeit zur Abdichtung des Innenbereichs der Nabe.

Weitere Vorteile und Merkmale der vorliegenden Erfindung ergeben sich aus der nachfolgenden Beschreibung mit Bezug auf die beigefügten Figuren. Einzelne in den gezeigten Ausführungsformen offenbarte Merkmale können auch in anderen Ausführungsformen eingesetzt werden, sofern dies nicht ausdrücklich ausgeschlossen wurde. Es zeigen:
- Fig. 1: eine Radnabenanordnung mit einer Nabe und einer Radkappe;
- Fig. 2: eine bevorzugte Ausführungsform der erfindungsgemäßen Radkappe;
- Fig. 3: eine schematische Ansicht einer bevorzugten Ausführungsform der Radnabenanordnung; und
- Fig. 4: eine Schnittansicht einer bevorzugten Ausführungsform der erfindungsgemäßen Radnabenanordnung.

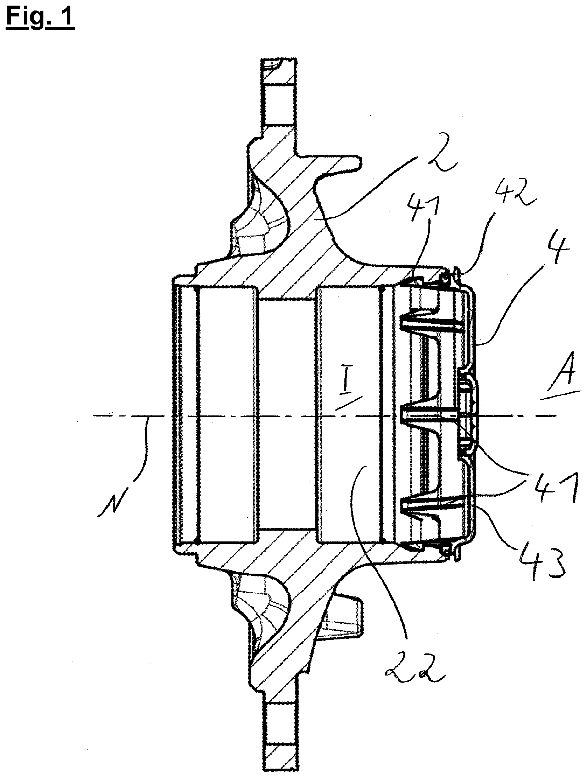

Fig. 1 zeigt eine bevorzugte Ausführungsform einer erfindungsgemäßen Radnabenanordnung, wobei eine Nabe 2 eine Aussparung 22 aufweist und wobei an der in der Figur rechten Seite der Nabe 2 eine Radkappe 4 angeordnet ist. Die Radkappe 4 weist einen Eingriffsabschnitt 41 auf, welcher dazu ausgelegt ist, formschlüssig mit einem entsprechend korrespondierenden Eingriffsabschnitt an der Nabe 2 in Eingriff zu gelangen, um die Radkappe 4 an der Nabe 2 festzulegen. Bevorzugt weist die Radkappe 4 eine Vielzahl einzelner und gleichmäßig über den Umfang der Radkappe 4 verteilten Eingriffsabschnitten 41 auf, wie dies in der Figur dargestellt ist. Die Radkappe 4 ist derart an der Nabe 2 angeordnet, dass sie einen Innenbereich I der Nabe 2 von einem Außenbereich A der Nabe 2 abtrennt. Der Innenbereich I ist, mit anderen Worten, vorzugsweise der in der Aussparung 22 gebildete Raum. Besonders bevorzugt sind die Nabe 2 und die Radkappe 4 im Wesentlichen rotationssymmetrisch zu einer Rotationsachse N ausgebildet. Die Radkappe 4 erstreckt sich dabei im Wesentlichen quer zu der Rotationsachse N, das heißt der größere Anteil der Erstreckung der Radkappe 4 verläuft quer zur Rotationsachse N. Weiterhin bevorzugt weist die Radkappe 4 einen sich hauptsächlich quer zur Rotationsachse N erstreckenden Deckelbereich 43 auf. Weiterhin weist die Radkappe 4 einen Abschirmabschnitt 42 auf, welcher vorzugsweise als umlaufender Vorsprung ausgebildet ist und sich im Wesentlichen quer zur Rotationsachse N erstreckt und einen zwischen der Radkappe 4 und der Nabe 2 gebildeten Spalt gegen das Einströmen von Flüssigkeit oder Schmutzteilen abschirmt.

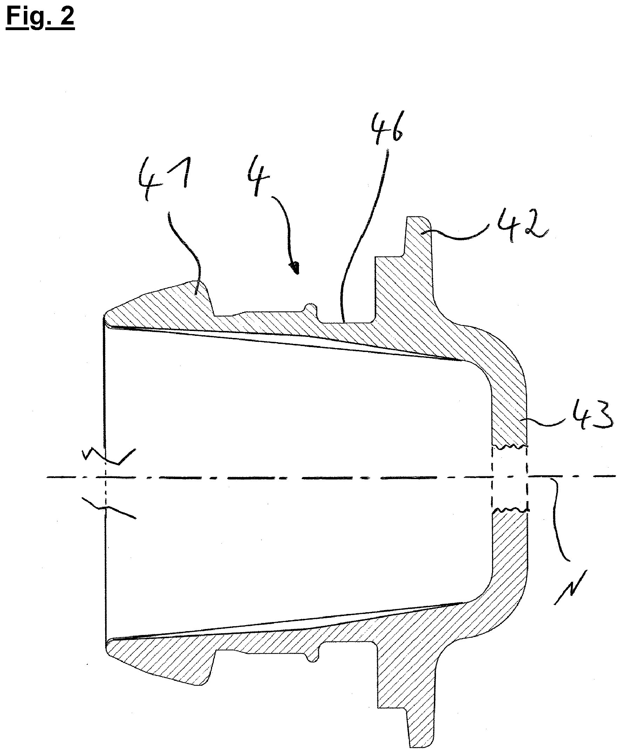

Fig. 2 zeigt eine bevorzugte Ausführungsform der erfindungsgemäßen Radkappe 4. Wesentliches Element der Radkappe 4 ist der Abschirmabschnitt 42, welcher sich vorzugsweise quer oder im Wesentlichen quer zu einer Rotationsachse N an der Radkappe 4 nach außen hin erstreckt und dazu dient, einen Spalt der zwischen der Radkappe 4 und einer Nabe (nicht gezeigt) abzuschirmen. Vorzugsweise weist die Radkappe 4 einen Aufnahmeabschnitt 46 auf, welcher dazu ausgelegt ist, ein Dichtungselement (nicht gezeigt) aufzunehmen und im Wesentlichen gegen Verlagerung zu sichern. Mit Vorteil sichert der Aufnahmeabschnitt 46 das Dichtungselement gegen Verlagerung in zwei Richtungen längs der, bzw. parallel zur Rotationsachse N. Weiterhin bevorzugt ist der Abschirmabschnitt 42, der Deckelbereich 43, und der Aufnahmeabschnitt 46 rotationssymmetrisch um eine Rotationsachse N ausgebildet. Eine Vielzahl von Eingriffsabschnitten 41 ist vorzugsweise in gleichmäßigen Abschnitten entlang einer um die Rotationsachse N verlaufenden Kreisbahn verteilt.

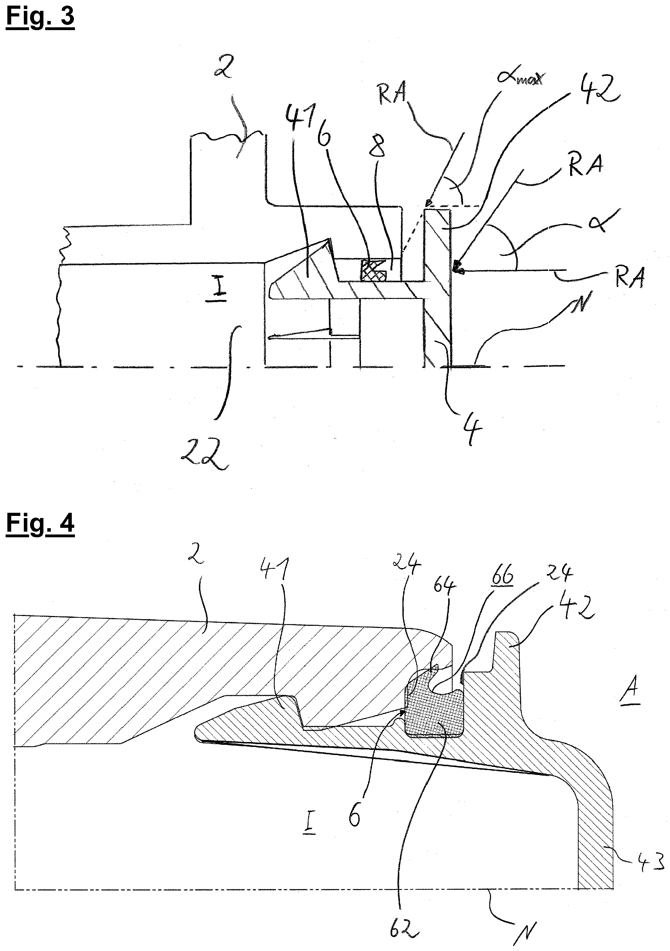

Fig. 3 zeigt eine schematische, teilweise geschnittene Ansicht einer bevorzugten Ausführungsform der erfindungsgemäßen Radnabenanordnung. Dabei ist insbesondere verdeutlicht, dass der Abschirmabschnitt 42 der Radkappe 4 ausgelegt ist, eine Strömung, die in Richtung des zwischen der Radkappe 4 und der Nabe 2 gebildeten Spaltes 8 strömt, abzuschirmen, so dass diese Fluidströmung den Spalt 8 nicht ungehindert erreicht. Dabei ist verdeutlicht, dass der Abschirmabschnitt 42 geeignet ist, auch Strömungen vom Erreichen des Spaltes 8 abzuhalten, die mit einem Abschirmwinkel α entlang verschiedener Abschirmrichtungen RA in Richtung des Innenraumes I der Nabe 2 strömen. Der Winkel α wird dabei von einer Parallelen zur Rotationsachse N gemessen. Vorzugsweise ist ein maximaler Abschirmwinkel αₘₐₓ definiert, um welchen relativ zur Rotationsachse N verschwenkt die Strömung, die sich entlang einer Abschirmrichtung RA bewegt, gerade noch vom direkten Erreichen des Spaltes 8 durch den Abschirmabschnitt 42 gehindert werden kann. Bevorzugt liegt der maximale Abschirmwinkel αₘₐₓ der Abschirmrichtung RA in einem Bereich von 20° bis 90°, vorzugsweise 30° bis 80° und insbesondere bevorzugt bei ca. 35° bis 70°. Zur Erhöhung der Dichtwirkung der Radkappe 4 ist zwischen der Radkappe 4 und der Nabe 2 vorzugsweise ein Dichtungselement 6 angeordnet.

Fig. 4 zeigt eine Schnittansicht einer weiteren bevorzugten Ausführungsform der erfindungsgemäßen Radnabenanordnung, wobei der Einfachheit halber nur der obere Teil der rotationssymmetrisch um die Rotationsachse N ausgebildeten Nabe 2 und Radkappe 4 dargestellt ist. Das Dichtungselement 6 ist vorzugsweise als Dichtungsprofil ausgebildet und weist einen Grundkörper 62 und eine Dichtlippe 64 auf. Die Dichtlippe 64 steht mit Vorteil derart vom Grundkörper 62 ab, dass sie in Richtung des Außenbereiches A weist. An der zum Außenbereich A hin gewandten Außenfläche definieren die Dichtlippe 64 und der Grundkörper 62 mit Vorteil eine konkav gekrümmte Außenfläche 66. Das in Fig. 4 dargestellte Dichtungselement 6 repräsentiert den unbelasteten, das heißt unverformten Zustand des Dichtungselements 6, wobei erkennbar ist, dass das Dichtungselement ein Übermaß gegenüber der zwischen der Nabe 2 und der Radkappe 4 gebildeten Geometrie aufweist, welche für den Einbau des Dichtungselements 6 vorgesehen ist. In einem eingebauten (nicht in der Figur gezeigten) Zustand ist das Dichtungselement 6 somit vorgespannt und wird sowohl gegen die kontaktierenden Flächen der Radkappe 4 als auch gegen die kontaktierenden Flächen der Nabe 2 gepresst. Durch diese Vorspannung lässt sich eine verbesserte Abdichtungswirkung durch das Dichtungselement 6 erzielen. Besonders bevorzugt wird bei der dargestellten Ausführungsform der Radnabenanordnung das vorteilhafte, als Profildichtung ausgebildete, Dichtungselement 6 durch einen Abschirmabschnitt 42 der Radkappe 4 gegen direktes Eintreffen eines Wasserstrahles oder einer Schmutzpartikelströmung abgeschirmt. Solche Wasserstrahlen können beispielsweise bei einer Hochdruckreinigung der Räder des Nutzfahrzeuges auftreten. Es versteht sich, dass die beispielsweise in Fig. 3 dargestellten Geometrien auch für den in Fig. 4 dargestellten Gegenstand Anwendung finden können.

### Bezugszeichen:

2 - Nabe
4 - Radkappe
6 - Dichtungselement
8 - Spalt
22 - Aussparung
24 - Anschlagfläche
41 - Eingriffsabschnitt
42 - Abschirmabschnitt
43 - Deckelbereich
46 - Aufnahmeabschnitt
62 - Grundkörper
64 - Dichtlippe
66 - gekrümmte Außenfläche
α - Abschirmwinkel
A - Außenbereich
I - Innenbereich
N - Rotationsachse
RA - Abschirmrichtung

## Patentansprüche

1. Radnabenanordnung umfassend eine Nabe (2) und eine Radkappe (4),
wobei die Radkappe (4) in einer Aussparung (22) der Nabe (2) derart festlegbar ist, dass die Radkappe (4) einen Außenbereich (A) von einem Innenbereich (I) der Nabe (2) abgrenzt,
wobei zwischen der Nabe (2) und der Radkappe (4) ein Spalt (8) gebildet ist, **dadurch gekennzeichnet, dass** in dem Spalt (8) ein Dichtungselement (6) angeordnet ist, welches einen Grundkörper (62) und eine Dichtlippe (64) aufweist, wobei die Dichtlippe (64) vom Grundkörper (62) absteht und zum Außenbereich (A) gewandt ist.

2. Radnabenanordnung nach Anspruch 1,
wobei der Grundkörper (62) und die Dichtlippe (64) eine gekrümmte Außenfläche (66) bilden, die zum Außenbereich (A) hin konkav gekrümmt ist.

3. Radnabenanordnung nach einem der vorhergehenden Ansprüche,
wobei die Dichtlippe (64) derart ausgebildet ist, dass bei Anliegen eines höheren Druckes im Außenbereich (A) als im Innenbereich (I) der Anpressdruck der Dichtlippe an die Nabe (2) oder die Radkappe (4) vergrößert ist.

4. Radnabenanordnung nach einem der vorhergehenden Ansprüche,
wobei das Dichtungselement (6) im vorgespannten Zustand zwischen der Nabe (2) und der Radkappe (4) angeordnet ist,
wobei die Nabe (2) eine Anschlagfläche (24) aufweist, die das Dichtungselement (6) gegen Verlagerung zum Innenbereich (I) hin sichert.

5. Radnabenanordnung nach einem der vorhergehenden Ansprüche,
wobei das Dichtungselement (6) in einem Aufnahmeabschnitt (46) der Radkappe (4) gehalten ist.

6. Radnabenanordnung nach einem der vorhergehenden Ansprüche,
wobei die Radkappe (4) einen Eingriffsabschnitt (41) aufweist, der in der Aussparung (22) der Nabe (2) festlegbar ist.

7. Radnabenanordnung nach einem der vorhergehenden Ansprüche,
wobei die Radkappe (4) einen Abschirmabschnitt (42) aufweist, welcher den Spalt (8) zwischen Nabe (2) und Radkappe (4) in zumindest einer Abschirmrichtung (RA) abschirmt.

8. Radnabenanordnung nach Anspruch 7,
wobei der Abschirmabschnitt (42) als umlaufender Vorsprung ausgebildet ist und im Wesentlichen quer zu einer Rotationsachse (N) von der Radkappe (4) absteht.

9. Radnabenanordnung nach einem der Ansprüche 7 oder 8,
wobei die Abschirmrichtung (RA) in einem Abschirmwinkel (a) von 0° bis 90° zu der Rotationsachse (N) steht.

10. Radnabenanordnung nach einem der Ansprüche 7 bis 9,
wobei der maximale Abschirmwinkel (αₘₐₓ) der Abschirmrichtung (RA) in einem Bereich von 20° bis 90°, vorzugsweise 30° bis 80° und insbesondere bevorzugt bei ca. 35° bis 70° liegt.

11. Radnabenanordnung nach einem der Ansprüche 2 bis 10,
wobei die gekrümmte Außenfläche (66) einen mittleren Krümmungsradius aufweist, der ein 0,3- bis 2,5-faches, vorzugsweise ein 0,5- bis 1,5-faches und besonders bevorzugt ein 0,5- bis 0,8-faches der Breite des Spaltes (8) ist.

## Claims

1. A wheel hub arrangement comprising a hub (2) and a wheel cover (4),
wherein the wheel cover (4) can be fixed in a recess (22) in the hub (2) in such a way that the wheel cover (4) delimits an outer region (A) with respect to an inner region (I) of the hub (2),
wherein a gap (8) is formed between the hub (2) and the wheel cover (4), **characterized in that** a seal element (6) is arranged in the gap (8), said seal element has a main body (62) and a sealing lip (64), wherein the sealing lip (64) projects from the main body (62) and faces the outer region (A).

2. The wheel hub arrangement as claimed in claim 1,
wherein the main body (62) and the sealing lip (64) form a curved outer surface (66), which is curved concavely toward the outer region (A).

3. The wheel hub arrangement as claimed in one of the preceding claims,
wherein the sealing lip (64) is designed in such a way that, when there is a higher pressure in the outer region (A) than in the inner region (I), the contact pressure of the sealing lip on the hub (2) or the wheel cover (4) is increased.

4. The wheel hub arrangement as claimed in one of the preceding claims,
wherein the seal element (6) is arranged in the preloaded state between the hub (2) and the wheel cover (4),
wherein the hub (2) has a stop surface (24), which secures the seal element (6) against displacement toward the inner region (I).

5. The wheel hub arrangement as claimed in one of the preceding claims,
wherein the seal element (6) is held in a receiving section (46) of the wheel cover (4).

6. The wheel hub arrangement as claimed in one of the preceding claims,
wherein the wheel cover (4) has an engagement section (41), which can be fixed in the recess (22) in the hub (2).

7. The wheel hub arrangement as claimed in one of the preceding claims,
wherein the wheel cover (4) has a shielding section (42), which shields the gap (8) between the hub (2) and the wheel cover (4) in at least one shielding direction (RA).

8. The wheel hub arrangement as claimed in claim 7,
wherein the shielding section (42) is designed as an encircling projection and projects from the wheel cover (4) substantially transversely to an axis (N) of rotation.

9. The wheel hub arrangement as claimed in one of claims 7 or 8,
wherein the shielding direction (RA) is at a shielding angle (a) of 0° to 90° to the axis (N) of rotation.

10. The wheel hub arrangement as claimed in one of claims 7 to 9,
wherein the maximum shielding angle (αₘₐₓ) of the shielding direction (RA) is in a range from 20° to 90°, preferably 30° to 80° and particularly preferably about 35° to 70°.

11. The wheel hub arrangement as claimed in one of claims 2 to 10,
wherein the curved outer surface (66) has a mean radius of curvature which is 0.3 to 2.5 times, preferably 0.5 to 1.5 times and particularly preferably 0.5 to 0.8 times the width of the gap (8).

## Revendications

1. Ensemble de moyeu de roue, comportant un moyeu (2) et un capuchon (4), le capuchon (4) pouvant être immobilisé dans une échancrure (22) du moyeu (2) de telle sorte que le capuchon (4) délimite une zone extérieure (A) vis-à-vis d'une zone intérieure (I) du moyeu (2),
un intervalle (8) étant formé entre le moyeu (2) et le capuchon (4),
**caractérisé en ce qu'**un élément d'étanchéité (6) est agencé dans l'intervalle (8), qui présente un corps de base (62) et une lèvre d'étanchéité (64), la lèvre d'étanchéité (64) faisant saillie du corps de base (62) et étant tournée vers la zone extérieure (A).

2. Ensemble de moyeu de roue selon la revendication 1,
dans lequel
le corps de base (62) et la lèvre d'étanchéité (64) forment une surface extérieure incurvée (66) qui est incurvée de façon concave vers la zone extérieure (A).

3. Ensemble de moyeu de roue selon l'une des revendications précédentes,
dans lequel
la lèvre d'étanchéité (64) est réalisée de telle sorte qu'en présence d'une pression plus élevée dans la zone extérieure (A) que dans la zone intérieure (I), la pression d'application de la lèvre d'étanchéité contre le moyeu (2) ou contre le capuchon (4) est augmentée.

4. Ensemble de moyeu de roue selon l'une des revendications précédentes,
dans lequel
dans l'état précontraint, l'élément d'étanchéité (6) est agencé entre le moyeu (2) et le capuchon (4),
le moyeu (2) présentant une surface de butée (24) qui bloque l'élément d'étanchéité (6) à l'encontre d'un déplacement vers la zone intérieure (I).

5. Ensemble de moyeu de roue selon l'une des revendications précédentes,
dans lequel
l'élément d'étanchéité (6) est retenu dans une portion de logement (46) du capuchon (4).

6. Ensemble de moyeu de roue selon l'une des revendications précédentes,
dans lequel
le capuchon (4) présente une portion d'engagement (41) qui peut être immobilisée dans l'échancrure (22) du moyeu (2).

7. Ensemble de moyeu de roue selon l'une des revendications précédentes,
dans lequel
le capuchon (4) présente une portion de protection (42) qui protège l'intervalle (8) entre le moyeu (2) et le capuchon (4) dans au moins une direction de protection (RA).

8. Ensemble de moyeu de roue selon la revendication 7,
dans lequel
la portion de protection (42) est réalisée sous forme de saillie périphérique et fait saillie depuis le capuchon (4) sensiblement transversalement à un axe de rotation (N).

9. Ensemble de moyeu de roue selon l'une des revendications 7 ou 8,
dans lequel
la direction de protection (RA) se situe sous un angle de protection (α) de 0° à 90° par rapport à l'axe de rotation (N).

10. Ensemble de moyeu de roue selon l'une des revendications 7 à 9,
dans lequel
l'angle de protection maximal (αₘₐₓ) de la direction de protection (RA) est dans une plage de 20° à 90°, de préférence de 30° à 80° et de préférence particulaire d'environ 35° à 70°.

11. Ensemble de moyeu de roue selon l'une des revendications 2 à 10,
dans lequel
la surface extérieure (66) incurvée présente un rayon de courbure moyen qui est de 0,3 à 2,5 fois, de préférence de 0,5 à 1,5 fois et de préférence particulière de 0,5 à 0,8 fois la largeur de l'intervalle (8).
